# EUROPÄISCHE PATENTSCHRIFT

(11) **EP 2 830 927 B1**
(45) Veröffentlichungstag und Bekanntmachung des Hinweises auf die Patenterteilung: **14.09.2016**
(21) Anmeldenummer: 13704363.4
(22) Anmeldetag: 14.02.2013
(51) Int. Cl.: B62D 1/184

(54) **AUFSTECKKÖRPER FÜR EINEN SPANNBOLZEN**
PLUG-ON BODY FOR A CLAMPING BOLT
CORPS D'ENFICHAGE POUR UN BOULON DE SERRAGE

(30) Priorität: 26.03.2012 DE 102012102556
(43) Veröffentlichungstag der Anmeldung: 04.02.2015
(73) Patentinhaber: ThyssenKrupp Presta Aktiengesellschaft, 9492 Eschen (LI); ThyssenKrupp AG, 45143 Essen (DE)
(72) Erfinder: KERN, Jürgen, CH-8575 Bürglen (CH); DOMIG, Markus, A-6781 Bartholomäberg (AT); HAUGG, Hans, AT-6800 Feldkrich (AT); LEITGEB, Michael, FL-9493 Mauren (LI)
(74) Vertreter: Fechner, Thomas
(86) Internationale Anmeldenummer: PCT/EP2013/000424
(87) Internationale Veröffentlichungsnummer: WO 2013/143635

(56) Entgegenhaltungen:
- EP-A1- 2 431 257
- DE-A1- 10 161 849

## Beschreibung

Die vorliegende Erfindung betrifft einen Aufsteckkörper für einen Spannbolzen einer verstellbaren Lenksäule für ein Kraftfahrzeug, wobei der Aufsteckkörper zumindest eine Öffnung zum Hindurchführen des Spannbolzens durch die Öffnung und zumindest einen oder zwei gedämpfte Langlochendanschläge zum Dämpfen eines Anschlagens des Spannbolzens an einem Ende eines Langlochs aufweist.

Verstellbare Lenksäulen sind Lenksäulen, die zur Anpassung der Position des Lenkrades an die jeweilige Fahrzeuglenkerin bzw. den jeweiligen Fahrzeuglenker verstellbar sind. Die beim Stand der Technik bekannten Lenksäulen sind überwiegend aus Metall gefertigt. Der Spannbolzen ist ein Teil einer Feststelleinrichtung bzw. eines Spannsystems der Lenksäule. In der geöffneten Stellung der Feststelleinrichtung bzw. des Spannsystems ist die Lenksäule verstellbar. In der Schließstellung der Feststelleinrichtung bzw. des Spannsystems ist die Lenksäule für den Normalbetrieb also das Fahren des Fahrzeugs fixiert.

Beim Stand der Technik sind die Verstellvorgänge der Lenksäule häufig mit einer erheblichen Geräuschentwicklung verbunden, da Metallteile der Lenksäule aneinander entlang reiben bzw. in den Endlagen aufeinander aufschlagen.

Aus der DE 101 61 849 B4 und der EP 2 431 257 A1 ist jeweils ein gattungsgemäßer Aufsteckkörper für einen Spannbolzen einer solchen verstellbaren Lenksäule bekannt, welcher dazu dient, das Anschlagen des Spannbolzens beim Erreichen der Endlagen in Langlöchern, in denen der Spannbolzen geführt ist, abzudämpfen.

Beim Stand der Technik ist es darüber hinaus auch bekannt, die oben genannten Feststelleinrichtungen bzw. Spannsysteme mit zwei gegeneinander verdrehbaren Nockenträgern auszurüsten, wobei beim Verdrehen der Nockenträger gegeneinander durch das Entlanggleiten der Nocken der beiden Nockenträger aneinander ein Hub in Längsrichtung des Spannbolzens erzeugt wird, welcher dem Verstellen der Feststelleinrichtung bzw. des Spannsystems zwischen der genannten geöffneten Stellung und der genannten Schließstellung dient. Auch beim gegeneinander Verdrehen der beiden Nockenträger treten Geräusche auf.

Aufgabe der Erfindung ist es, eine einfach umsetzbare Möglichkeit zu schaffen, wie die Geräuschentwicklung in der Lenksäule bei den genannten Verstellvorgängen weiter reduziert werden kann.

Erfindungsgemäß wird dies durch einen Aufsteckkörper gemäß Patentanspruch 1 erreicht. Weiter wird die Aufgabe durch eine erfindungsgemäße Lenksäule entsprechend Patentanspruch 8 gelöst. In den jeweils abhängigen Ansprüchen sind vorteilhafte Weiterbildungen der Erfindung beschrieben.

Es ist somit ein Grundgedanke der Erfindung, gattungsgemäße Aufsteckkörper dahingehend weiterzubilden, dass sie zusätzlich zumindest einen Nockenträgerdämpfer zum Dämpfen einer Verdrehbewegung zwischen einem ersten Nockenträger der Lenksäule und zumindest einem weiteren Nockenträger der Lenksäule aufweist.

Vorzugsweise wirkt dieser Nockenträgerdämpfer zumindest bei der Öffnungsbewegung der Feststelleinrichtung bzw. des Spannsystems, also bei einer Bewegung ausgehend von der Schließstellung der Feststelleinrichtung bzw. des Spannsystems hin zu deren geöffneter Stellung, in der eine Verstellung der Lenksäule möglich ist. Natürlich kann der Nockenträgerdämpfer auch zusätzlich oder ausschließlich bei der entgegengesetzten Schließbewegung wirken.

Günstig ist es jedenfalls, wenn der Nockenträgerdämpfer zum Dämpfen eines Endanschlags der Verdrehbewegung zwischen dem ersten Nockenträger der Lenksäule und dem zumindest einen weiteren Nockenträger der Lenksäule dient. Alternativ oder zusätzlich kann der Nockenträgerdämpfer aber auch schon vor Erreichen der Endstellung bzw. des Endanschlags, also während der Verdrehung der Nockenträger relativ zueinander seine Dämpfwirkung entfalten.

Im Sinne einer geräuscharmen Führung des Spannbolzens im Langloch der verstellbaren Lenksäule sehen bevorzugte Ausgestaltungsformen der Erfindung vor, dass der Aufsteckkörper zusätzlich eine oder mehrere Führungsflächen zum Entlanggleiten an einer Seitenwand des Langlochs aufweist. Weiters kann im Sinne eines möglichst multifunktionalen Aufsteckkörpers auch vorgesehen sein, dass der Aufsteckkörper zumindest einen Hubendanschlag zum Begrenzen einer Verschiebebewegung des Aufsteckkörpers entlang des Spannbolzens aufweist. Der Hubendanschlag kann dann z.B. als Teil einer Federzunge ausgebildet sein. Zur Fixierung des Aufsteckkörpers an einem der Nockenträger kann der Aufsteckkörper eine entsprechende Fixiervorrichtung vorsehen. Besonders bevorzugte Ausgestaltungsformen sehen in diesem Zusammenhang vor, dass er eine oder mehrere Rasten zum Einrasten des Aufsteckkörpers an einem der Nockenträger aufweist. Bei Lenksäulen, bei denen der Spannbolzen nicht nur in einem sondern in zwei meist gekreuzt zueinander angeordneten Langlöchern geführt ist, kann der Aufsteckkörper Langlochendanschläge zum Dämpfen des jeweiligen Anschlagens des Spannbolzens an allen Enden beider Langlöcher aufweisen, wie dies beim oben genannten Stand der Technik an sich bekannt ist. Entsprechend kann der Aufsteckkörper auch Führungsflächen zum Entlanggleiten an den Seitenwänden beider Langlöcher aufweisen.

Bevorzugte Ausgestaltungsformen der Erfindung sehen vor, dass der Aufsteckkörper vollständig oder zumindest zum Teil aus Kunststoff ausgebildet ist. Es kann sich dabei auch um einen Mehrkomponentenkörper aus verschiedenen Kunststoffen handeln. Günstig ist jedenfalls die Verwendung von elastomeren Kunststoffen, um eine besonders gute Dämpfungswirkung zu erzielen. Der Aufsteckkörper kann Kunststoff aufweisen oder vollständig daraus ausgebildet sein. Der Aufsteckkörper kann einteilig sein und z.B. im Spritzgussverfahren gegebenenfalls im Mehrkomponentenspritzguss gefertigt werden.

Neben dem Aufsteckkörper an sich betrifft die Erfindung auch eine verstellbare Lenksäule für ein Kraftfahrzeug mit zumindest einem Spannbolzen und zumindest einem erfindungsgemäßen Aufsteckkörper, wobei der Spannbolzen durch die Öffnung des Aufsteckkörpers hindurchgeführt ist und der oder die Langlochendanschläge in einem Langloch der Lenksäule angeordnet ist bzw. sind und der Nockenträgerdämpfer zwischen einem ersten Nockenträger der Lenksäule und zumindest einem weiteren Nockenträger der Lenksäule angeordnet ist und/oder wirkt. Der Aufsteckkörper kann in Längsrichtung des Spannbolzens auf diesem verschiebbar gelagert sein. Dies gilt dann zumindest bis zum Erreichen des oben genannten Hubendanschlags, wenn dieser vorhanden ist. Der Aufsteckkörper kann aber alternativ oder auch zusätzlich in Umfangsrichtung des Spannbolzens auf diesem verdrehbar gelagert sein. Bevorzugte Ausgestaltungsformen erfindungsgemäßer verstellbarer Lenksäulen sehen vor, dass der erste Nockenträger und/oder der weitere Nockenträger in einem Ring angeordnete und miteinander zusammenwirkende Nocken aufweisen und der Nockenträgerdämpfer bzw. die Nockenträgerdämpfer innerhalb des Ringes angeordnet ist bzw. sind.

Weitere Merkmale und Einzelheiten bevorzugter Ausgestaltungsformen der Erfindung werden im Nachfolgenden anhand eines erfindungsgemäßen Ausführungsbeispiels beispielhaft erläutert. Es zeigen:
Fig. 1 eine erfindungsgemäß verstellbare Lenksäule für ein Kraftfahrzeug;
Fig. 2 und 3 den erfindungsgemäßen Aufsteckkörper der Lenksäule gemäß Fig. 1 mit hindurchgeführtem Spannbolzen in einer perspektivischen Ansicht (Fig. 2) und in einer Seitenansicht (Fig. 3);
Fig. 4 bis 9 verschiedene Darstellungen des erfindungsgemäßen Aufsteckkörpers dieses Ausführungsbeispiels;
Fig. 10 eine Darstellung zum Zusammenwirken des Nockenträgerdämpfers und der Nockenträger dieser Lenksäule und
Fig. 11 eine Darstellung einer alternativen Ausführung des erfindungsgemäßen Aufsteckkörpers.

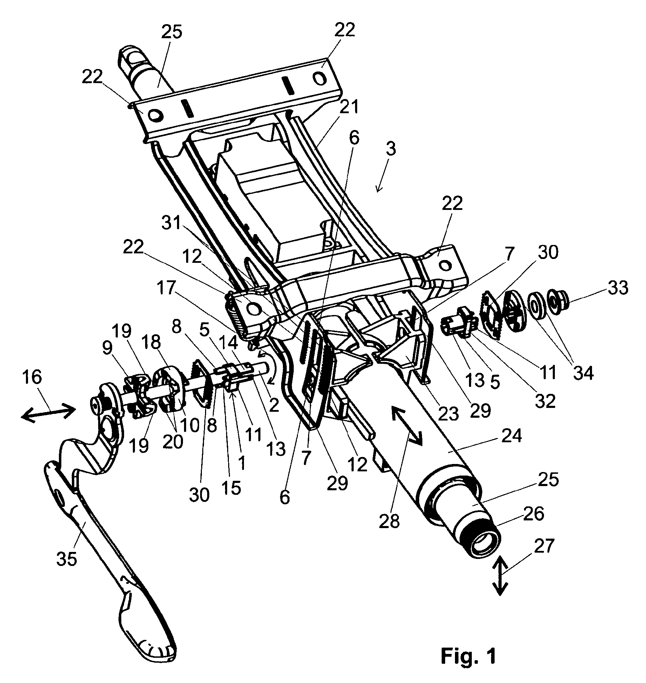

Anhand von Fig. 1 werden zunächst einmal die bei diesem Ausführungsbeispiel einer erfindungsgemäßen Lenksäule 3 realisierten, beim Stand der Technik an sich bekannten Merkmale beschrieben. Die verstellbare Lenksäule 3 weist ein Tragteil 21 auf, welches über die Befestigungslaschen 22 an der Karosserie des Fahrzeugs fixiert werden kann, um die Lenksäule 3 in der Karosserie des Fahrzeugs zu halten. Die Lenkspindel 25 an deren Lenkradanschluss 26 das Lenkrad befestigt werden kann, ist um ihre Längsachse drehbar in der Lenkspindellagereinheit 24 gelagert. Die Lenkspindellagereinheit 24 ist unter Zwischenschaltung des Zwischenhebels 23 am Tragteil 21 gelagert. Im geöffneten Zustand der weiter unten noch im Detail geschilderten Feststelleinrichtung dieses Ausführungsbeispiels kann die Lenkspindellagereinheit in Längsrichtung 28 der Lenkspindel 25 im Zwischenhebel 23 verschoben werden. Hierdurch ist für eine Längsverstellung der Lenksäule 3 die Lenkspindel 25 mit ihrem Lenkradanschluss 26 in Längsrichtungen 28 relativ zum Tragteil 21 und damit zur Karosserie des Fahrzeugs verstellbar. Für eine Höhenverstellung in den Höhenrichtungen 27 wird die Lenkspindel 25 samt Lenkspindellagereinheit 24 und Zwischenhebel 23 relativ zum Tragteil 21 und damit relativ zur Karosserie verschwenkt. Die Verschwenkbewegung erfolgt wie an sich bekannt, um ein hier nicht im Detail dargestelltes Schwenkgelenk mit dem der Zwischenhebel 23 am Tragteil 21 befestigt ist. Diese an sich bekannte Verstellung der Lenksäule 3 ist des Fahrzeugs nur möglich, wenn die Feststelleinrichtung sich im geöffneten Zustand befindet. Im geschlossenen Zustand der Feststelleinrichtung ist die Lenkspindellagereinheit 24 in ihrer Position relativ zum Tragteil 21 und damit zur Karosserie fixiert. Dies gilt zumindest so lange nur beim Normalbetrieb auf die Lenksäule 3 einwirkende Kräfte auftreten. Im Crashfall, also im Falle eines Unfalls, ist es bekannt, bei solchen Lenksäulen 3 zur gezielten Energieaufzehrung auch bei geschlossener Feststelleinrichtung eine Verschiebung der Lenkspindellagereinheit 24 relativ zum Tragteil 21 zuzulassen. In diesem Zusammenhang sei darauf hingewiesen, dass erfindungsgemäße Lenksäulen 3 nicht nur mit verschiedensten Ausgestaltungsformen von Feststelleinrichtungen, welche auch von dem hier geschilderten Ausführungsbeispiel abweichen können, sondern auch mit beim Stand der Technik bekannten Energieabsorptionsmechanismen ausgerüstet werden können.

Im gezeigten Ausführungsbeispiel gemäß Fig. 1 weist das Tragteil 21 zwei Seitenwangen 29 auf, zwischen denen der Zwischenhebel 23 und damit auch die Lenkspindellagereinheit 24 angeordnet ist. In jeder der Seitenwangen 29 befindet sich jeweils ein Langloch 7 durch das der Spannbolzen 2 hindurchgeführt ist. Auf dem Spannbolzen befinden sich, wie an sich bekannt, der Handbedienhebel 35 der Feststelleinrichtung, der damit drehfest verbundene erste Nockenträger 9 sowie der drehfest mit einer der Seitenwangen 29 verbundene weitere Nockenträger 10. Um einen Hub in Längsrichtung 16 des Spannbolzens 2 beim Verschwenken des Handbedienhebels 35 zu erwirken, gleiten die Nocken 19 des ersten Nockenträgers 9 an den Nocken 20 des weiteren Nockenträgers 10 entlang. Dies ist an sich in einer Vielzahl von Ausgestaltungsformen bekannt. Durch eine entsprechende Ausformung der Nocken können die bei dieser Öffnungs- bzw. Schließbewegung auftretenden Kräfte winkelabhängig sehr genau vorgegeben werden.

Auf der vom Handbedienhebel 35 abgewandten Seite ist der Spannbolzen 2 mittels der Zwischenlegscheiben 34 und der Mutter 33 an der gegenüberliegenden Seitenwange 29 abgestützt. Weiters ist der Spannbolzen 2 auf beiden Seiten in diesem Ausführungsbeispiel durch Verzahnungsplatten 30 hindurchgeführt. Diese Verzahnungsplatten 30 dienen im gezeigten Ausführungsbeispiel in Zusammenwirkung mit den an den Seitenwangen 29 angeordneten Zahnleisten 31 einer formschlüssigen Verriegelung der Feststelleinrichtung in deren Schließstellung. Im gezeigten Ausführungsbeispiel weisen die Verzahnungsplatten 30 federnde Bereiche auf, welche sie im geöffneten Zustand der Feststelleinrichtung aus den jeweiligen Zahnleisten 31 heben, sodass eine Höhenverstellung in Höhenrichtung 27 möglich ist. Die Lenkspindellagereinheit 24 kann bezüglich der Längsrichtungen 28 im Zwischenhebel 23 rein reibschlüssig feststellbar sein. Zwischen dem Zwischenhebel 23 und der Lenkspindellagereinheit 24 können aber auch entsprechende Verzahnungen wirken, sodass auch hier ein formschlüssiges Halten möglich ist. Natürlich kann die Feststelleinrichtung alternativ zum hier gezeigten Ausführungsbeispiel auch in Höhenrichtung 27 reibschlüssig klemmend ausgeführt sein. Im gezeigten Ausführungsbeispiel umfasst die Feststelleinrichtung den Spannbolzen 2, den Handbedienhebel 35, die genannten Verzahnungen und alle auf den Spannbolzen 2 aufgesteckten Bauteile. Durch entsprechendes Verschwenken des Handbedienhebels 35 ist der Spannbolzen dieses Ausführungsbeispiels zusammen mit dem Handbedienhebel 35 und dem daran drehfest befestigten Nockenträger 9 in den Umfangsrichtungen 17 drehbar. Der Hub in den Längsrichtungen 16 des Spannbolzens 2 wird, wie gesagt, über das Zusammenwirken der Nockenträger 9 und 10 erreicht. Der Nockenträger 10 dieses Ausführungsbeispiels ist in Form eines Rings 18 ausgebildet.

Um bei der Verdrehung des Spannbolzens 2 in seiner Umfangsrichtung 17 und auch bei dem Verschieben des Spannbolzens entlang der Langlöcher 7 eine unerwünschte Geräuschentwicklung zu vermeiden, ist in der beispielhaft dargestellten Variante gemäß Fig. 1 ein Aufsteckkörper 1 vorgesehen, durch dessen Öffnung 4 der Spannbolzen 2 hindurchgeführt ist. Der Aufsteckkörper 1 ist in den nachfolgenden Figuren noch einmal deutlicher dargestellt. An dieser Stelle sei allerdings darauf hingewiesen, dass der Aufsteckkörper 1 mit seinen Führungsflächen 11 an den Seitenwänden 12 der Langlöcher 7 gleitend gelagert ist. Durch diese Führungsflächen 11 wird einerseits eine saubere Führung des Spannbolzens 2 im Langloch 7 erreicht. Andererseits werden aber auch reibungsbedingte Geräusche bei dieser Verschiebebewegung vermieden. Um Anschlaggeräusche beim Erreichen der Enden 6 der Langlöcher 7 zu vermeiden, weist der Aufsteckkörper 1 die gedämpften Langlochendanschläge 5 auf. Um eine Geräuschentwicklung beim Verdrehen der beiden Nockenträger 9 und 10 relativ zueinander zu vermeiden, sind am Aufsteckkörper 1 erfindungsgemäß die Nockenträgerdämpfer 8 angeordnet. Diese dämpfen besonders bevorzugt das Anschlagen der Nockenträger 9 und 10 aneinander am Ende von deren Verdrehbewegung. Die Nockenträgerdämpfer können über einen entsprechenden Reibschluss aber auch schon vor Erreichen dieser Endlage dämpfend auf zumindest einen der Nockenträger 9 oder 10 einwirken.

Der Spannbolzen 2 ist im gezeigten Ausführungsbeispiel relativ zum Aufsteckkörper 1 sowohl in seiner Längsrichtung 16 verschiebbar als auch in seiner Umfangsrichtung 17 drehbar in der Öffnung 4 des Aufsteckkörpers 1 gelagert. Um einen Hub des Aufsteckkörpers 1 beim Schließen und/oder Öffnen der Feststelleinrichtung gezielt zu begrenzen, weist der Aufsteckkörper 1 im gezeigten Ausführungsbeispiel zusätzlich auch den Hubendanschlag 13 auf, welcher hier in diesem Ausführungsbeispiel als Teil einer Federzunge 14 ausgebildet ist.

Im Langloch 7 der dem Handbedienhebel 35 gegenüberliegenden Seitenwange 29 befindet sich ein Zusatzaufsteckkörper 32. Dieser weist wie der Aufsteckkörper 1 entsprechende Langlochendanschläge 5 und Führungsflächen 11 sowie auch einen Hubendanschlag 13 auf, deren Funktion dieselbe ist wie beim erfindungsgemäßen Aufsteckkörper 1. Dieser Zusatzaufsteckkörper 32 hat aber keinen Nockenträgerdämpfer 8, da auf dieser Seite der Feststelleinrichtung keine Nockenträger 9, 10 vorhanden sind.

Bevor anhand der nachfolgenden Figuren noch einmal detailliert auf den erfindungsgemäßen Aufsteckkörper 1 dieses Ausführungsbeispiels eingegangen wird, sei darauf hingewiesen, dass anstelle des Handbedienhebels 35 natürlich auch ein an sich bekannter motorischer Antrieb zum Verdrehen des Spannbolzens 2 vorgesehen sein kann. Darüber hinaus sind natürlich auch Ausführungsbeispiele der Erfindung denkbar, bei denen der Spannbolzen ruht und einer der Nockenträger 9 oder 10 relativ zum Spannbolzen in Umfangsrichtung 17 verdreht wird. Grundsätzlich können erfindungsgemäße Aufsteckkörper bei allen geeigneten, an sich bekannten reib- und/oder formschlüssigen Feststelleinrichtungen eingesetzt werden. Die Seitenwangen 29 und der Zwischenhebel 23 bzw. die Lenkspindellagereinheit 24 können auch sich kreuzende Langlöcher 7 aufweisen, in denen der Spannbolzen mittels erfindungsgemäßer Aufsteckkörper 1 geführt ist. Solche Aufsteckkörper 1 können dann wie der eingangs geschilderte Stand der Technik Langlochendanschläge 5 für die Enden beider der sich kreuzenden Langlöcher 7 aufweisen. Natürlich sind auch vereinfachte Ausgestaltungsformen erfindungsgemäßer Lenksäulen 3 möglich, bei denen eine Verstellung der Lenkspindel 25 zusammen mit dem Lenkradanschluss 26 entweder nur in den Höhenrichtungen 27 oder nur in den Längsrichtungen 28 möglich ist.

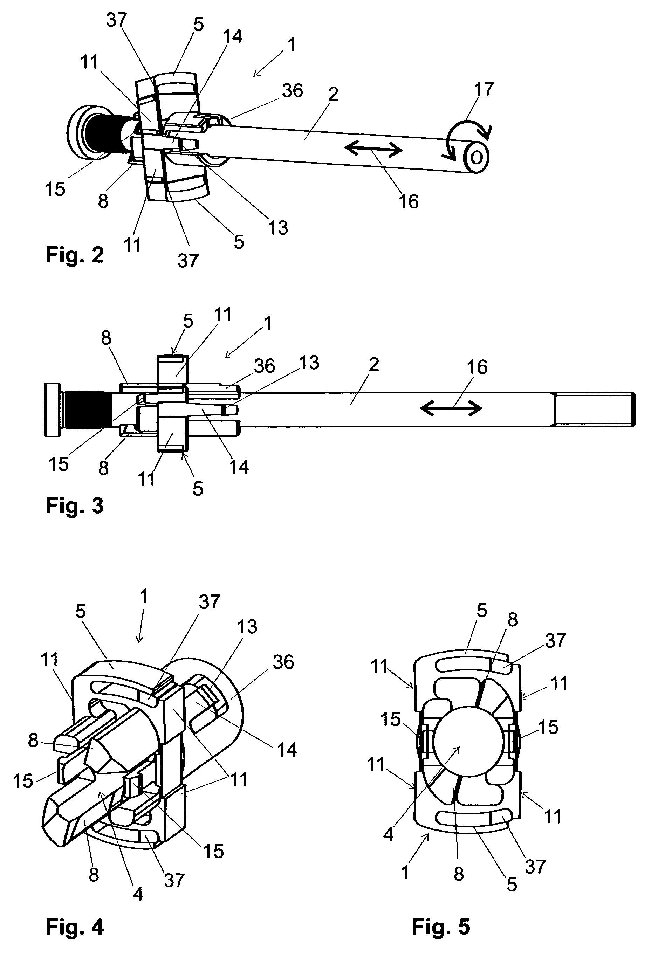

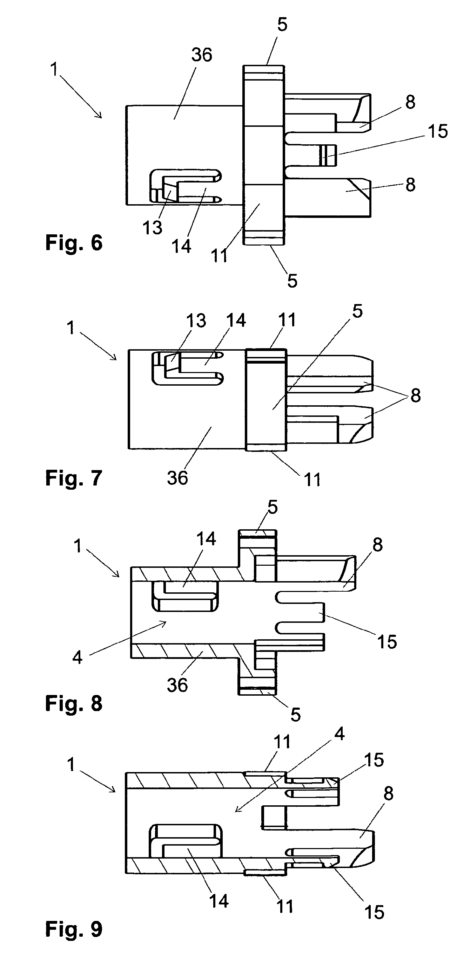

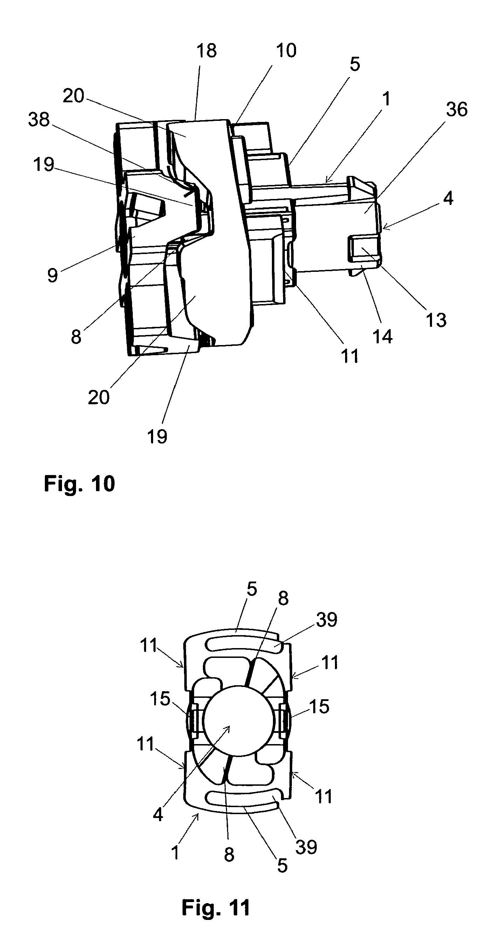

In den Fig. 2 und 3 sind der Aufsteckkörper 1 und der Spannbolzen 2 losgelöst von den anderen Bauteilen der verstellbaren Lenksäule 3 dargestellt. In den Fig. 4 bis 9 ist nur der erfindungsgemäß ausgebildete Aufsteckkörper 1 dieses Ausführungsbeispiels gezeigt. Fig. 4 zeigt eine perspektivische Ansicht, Fig. 5 eine Frontalansicht, Fig. 6 eine Seitenansicht, Fig. 7 eine Draufsicht, Fig. 8 einen Längsschnitt durch Fig. 6 und Fig. 9 einen Horizontalschnitt durch Fig. 7. In diesen Darstellungen ist besonders gut zu erkennen, dass der Aufsteckkörper 1 eine Art Hülse 36 aufweist, welche die Öffnung 4, durch die der Spannbolzen 2 hindurchgesteckt werden kann, ummantelt. Die Führungsflächen 11 dienen der geräuscharmen Führung des Aufsteckkörpers 1 entlang der Seitenwände 12 der Langlöcher 7. Die gedämpften Langlochendanschläge 5 vermeiden eine Geräuschentwicklung, wenn der Aufsteckkörper 1 an einem der Enden 6 der Langlöcher 7 anschlägt. Im gezeigten Ausführungsbeispiel sind die Langlochendanschläge 5 in Form von teilweise freigestellten Federzungen ausgebildet. Die frei auskragenden Enden dieser Federzungen lagern in diesem Ausführungsbeispiel auf weicheren Dämpfungskörpern 37, welche z.B. aus weicherem Elastomer ausgebildet sein können. Wie in Fig. 11 veranschaulicht, ist es alternativ denkbar und möglich, die Dämpfungskörper 37 nicht in den Aufsteckkörper 1 zu integrieren, sondern im zwischen Langlochendanschlag 5 und Öffnung 4 eine Freistellung 39 im Aufsteckkörper 1 auszubilden. Diese Freistellung 39 ermöglicht eine gute elastische Verformung des Langlochendanschlags 5 in den Raum der Freistellung 39 hinein. Dabei kann der Langlochendanschlag 5 durch geeignete Maßnahmen verstärkt und dauerhaltbar ausgelegt werden. Die Nockenträgerdämpfer 8 dienen der Dämpfung der Verdrehbewegung zwischen den Nockenträgern 9 und 10 wie dies anhand von Fig. 10 weiter unten noch einmal im Detail gezeigt ist. Mittels der Rasten 15 kann dieses Ausführungsbeispiel des Aufsteckkörpers 1 am weiteren Nockenträger 10 der in Fig. 1 gezeigten Lenksäule 3 fixiert werden. Der Hubendanschlag 13 dient der Hubbegrenzung des Aufsteckkörpers 1 in Längsrichtungen 16 des Spannbolzens 2. Im gezeigten Ausführungsbeispiel ist der Hubendanschlag auf einer Federzunge 14 des Aufsteckkörpers 1 ausgebildet. In Fig. 10 ist noch einmal losgelöst von den anderen Bauteilen der verstellbaren Lenksäule 3 das erfindungsgemäße Zusammenwirken des Aufsteckkörpers 1 mittels seinen Nockenträgerdämpfern 8 mit den Nockenträgern 9 und 10 bei deren Verdrehbewegung veranschaulicht. Der weitere Nocken 10 auf den der Aufsteckkörper 1 dieses Ausführungsbeispiels mittels der Rasten 15 aufgeschnappt wird, weist einen Ring 18 auf, welcher die Nocken 20 dieses Nockenträgers 10 trägt. Die Nockenträgerdämpfer 8 des Aufsteckkörpers 1 sind in diesem Ausführungsbeispiel innerhalb dieses Rings 18 angeordnet. Im gezeigten Ausführungsbeispiel verhindern sie, dass die Nocken 19 des einen Nockenträgers 9 bei der mittels Pfeil 38 veranschaulichten Öffnungsdrehbewegung an den Nocken 20 des anderen Nockenträgers 10 direkt anschlagen. Die erfindungsgemäßen Nockenträgerdämpfer 8 wirken hier als Endanschlagdämpfer bei der Verdrehbewegung zwischen den Nockenträgern 9 und 10 und dämpfen in dieser Funktion eine entsprechende Geräuschentwicklung beim Erreichen dieses Endanschlags ab. Natürlich kann über einen entsprechenden reibschlüssigen Kontakt zwischen Nockenträgerdämpfer 8 und dem Nockenträger 9 auch schon bei der vorher stattfindenden Verdrehbewegung eine entsprechende Dämpfung und damit Unterdrückung von Geräuschentwicklung erreicht werden.

**Legende**

| | | | |
|---|---|---|---|
| zu den Hinweisziffern: | | | |
| 1 | Aufsteckkörper | 29 | Seitenwange |
| 2 | Spannbolzen | 30 | Verzahnungsplatte |
| 3 | Lenksäule | 31 | Zahnleiste |
| 4 | Öffnung | 32 | Zusatzaufsteckkörper |
| 5 | Langlochendanschlag | 33 | Mutter |
| 6 | Ende | 34 | Zwischenlegscheibe |
| 7 | Langloch | 35 | Handbedienhebel |
| 8 | Nockenträgerdämpfer | 36 | Hülse |
| 9 | erster Nockenträger | 37 | Dämpfungskörper |
| 10 | weiterer Nockenträger | 38 | Pfeil |
| 11 | Führungsfläche | 39 | Freistellung |
| 12 | Seitenwand | | |
| 13 | Hubendanschlag | | |
| 14 | Federzunge | | |
| 15 | Raste | | |
| 16 | Längsrichtung | | |
| 17 | Umfangsrichtung | | |
| 18 | Ring | | |
| 19 | Nocken | | |
| 20 | Nocken | | |
| 21 | Tragteil | | |
| 22 | Befestigungslaschen | | |
| 23 | Zwischenhebel | | |
| 24 | Lenkspindellagereinheit | | |
| 25 | Lenkspindel | | |
| 26 | Lenkradanschluss | | |
| 27 | Höhenrichtung | | |
| 28 | Längsrichtung | | |

## Patentansprüche

1. Aufsteckkörper (1) für einen Spannbolzen (2) einer verstellbaren Lenksäule (3) für ein Kraftfahrzeug, wobei der Aufsteckkörper (1) zumindest eine Öffnung (4) zum Hindurchführen des Spannbolzens (2) durch die Öffnung (4) und zumindest einen oder zwei gedämpfte Langlochendanschläge (5) zum Dämpfen eines Anschlagens des Spannbolzens (2) an einem Ende (6) eines Langlochs (7) aufweist, **dadurch gekennzeichnet, dass** der Aufsteckkörper (1) zusätzlich zumindest einen Nockenträgerdämpfer (8) zum Dämpfen einer Verdrehbewegung zwischen einem ersten Nockenträger (9) der Lenksäule (3) und zumindest einem weiteren Nockenträger (10) der Lenksäule (3) aufweist.

2. Aufsteckkörper (1) nach Anspruch 1, **dadurch gekennzeichnet, dass** der Aufsteckkörper (1) zusätzlich eine oder mehrere Führungsflächen (11) zum Entlanggleiten an einer Seitenwand (12) des Langlochs (7) aufweist.

3. Aufsteckkörper (1) nach Anspruch 1 oder 2, **dadurch gekennzeichnet, dass** der Aufsteckkörper (1) zumindest einen Hubendanschlag (13) zum Begrenzen einer Verschiebebewegung des Aufsteckkörpers (1) entlang des Spannbolzens (2) aufweist.

4. Aufsteckkörper (1) nach Anspruch 3, **dadurch gekennzeichnet, dass** der Hubendanschlag (13) als Teil einer Federzunge (14) ausgebildet ist.

5. Aufsteckkörper (1) nach einem der Ansprüche 1 bis 4, **dadurch gekennzeichnet, dass** er eine oder mehrere Rasten (15) zum Einrasten des Aufsteckkörpers (1) an einem der Nockenträger (9, 10) aufweist.

6. Aufsteckkörper (1) nach einem der Ansprüche 1 bis 5, **dadurch gekennzeichnet, dass** er, vorzugsweise elastomeren, Kunststoff aufweist oder daraus ausgebildet ist.

7. Aufsteckkörper (1) nach einem der Ansprüche 1 bis 6, **dadurch gekennzeichnet, dass** er einteilig ausgebildet ist.

8. Verstellbare Lenksäule (3) für ein Kraftfahrzeug mit zumindest einem Spannbolzen (2) und zumindest einem Aufsteckkörper (1) nach einem der Ansprüche 1 bis 7, wobei der Spannbolzen (2) durch die Öffnung (4) des Aufsteckkörpers (1) hindurchgeführt ist und der oder die Langlochendanschläge (5) in einem Langloch (7) der Lenksäule (3) angeordnet ist bzw. sind und der Nockenträgerdämpfer (8) zwischen einem ersten Nockenträger (9) der Lenksäule (3) und zumindest einem weiteren Nockenträger (10) der Lenksäule (3) angeordnet ist und/oder wirkt.

9. Verstellbare Lenksäule (3) nach Anspruch 8, **dadurch gekennzeichnet, dass** der Aufsteckkörper (1) in Längsrichtung (16) des Spannbolzens (2) auf diesem verschiebbar und/oder in Umfangsrichtung (17) des Spannbolzens (2) auf diesem verdrehbar gelagert ist.

10. Verstellbare Lenksäule (3) nach Anspruch 8 oder 9, **dadurch gekennzeichnet, dass** der erste Nockenträger (9) und/oder der weitere Nockenträger (10) in einem Ring (18) angeordnete und miteinander zusammenwirkende Nocken (19, 20) aufweisen und der Nockenträgerdämpfer (8) bzw. die Nockenträgerdämpfer (8) innerhalb des Ringes (18) angeordnet ist bzw. sind.

## Claims

1. Plug-on body (1) for a clamping bolt (2) of an adjustable steering column (3) for a motor vehicle, wherein the plug-on body (1) has at least one opening (4) for guiding the clamping bolt (2) through the opening (4) and at least one or two damped slot end abutments (5) for damping an abutment of the clamping bolt (2) against an end (6) of a slot (7), **characterized in that** the plug-on body (1) additionally has at least one cam carrier damper (8) for damping a rotary movement between a first cam carrier (9) of the steering column (3) and at least one further cam carrier (10) of the steering column (3).

2. Plug-on body (1) according to claim 1, **characterized in that** the plug-on body (1) additionally has one or more guide faces (11) for sliding along a side wall (12) of the slot (7).

3. Plug-on body (1) according to claim 1 or 2, **characterized in that** the plug-on body (1) has at least one end-of-travel abutment (13) for limiting a sliding movement of the plug-on body (1) along the clamping bolt (2).

4. Plug-on body (1) according to claim 3, **characterized in that** the end-of-travel abutment (13) is designed as part of a flexible tongue (14).

5. Plug-on body (1) according to any one of claims 1 to 4, **characterized in that** it has one or more catches (15) for latching the plug-on body (1) onto one of the cam carriers (9, 10).

6. Plug-on body (1) according to any one of claims 1 to 5, **characterized in that** it comprises or is formed from plastic, preferably elastomeric plastic.

7. Plug-on body (1) according to any one of claims 1 to 6, **characterized in that** it is formed in one piece.

8. Adjustable steering column (3) for a motor vehicle, having at least one clamping bolt (2) and at least one plug-on body (1) according to any one of claims 1 to 7, wherein the clamping bolt (2) is guided through the opening (4) of the plug-on body (1) and the slot end abutment(s) (5) is or are arranged in a slot (7) of the steering column (3) and the cam carrier damper (8) is arranged and/or acts between a first cam carrier (9) of the steering column (3) and at least one further cam carrier (10) of the steering column (3).

9. Adjustable steering column (3) according to claim 8, **characterized in that** the plug-on body (1) is mounted on the clamping bolt (2) in such a way as to be able to slide in the longitudinal direction (16) of the latter and/or is mounted on the clamping bolt (2) in such a way as to be able to rotate in the circumferential direction (17) of the latter.

10. Adjustable steering column (3) according to claim 8 or 9, **characterized in that** the first cam carrier (9) and/or the further cam carrier (10) have cams (19, 20) which are arranged in an annulus (18) and which cooperate with one another, and the cam carrier damper (8) or the cam carrier dampers (8) is or are arranged within the annulus (18).

## Revendications

1. Corps d'enfichage (1) pour un boulon de serrage (2) d'une colonne de direction réglable (3) pour un véhicule automobile, dans lequel le corps d'enfichage (1) présente au moins une ouverture (4) pour l'introduction du boulon de serrage (2) à travers l'ouverture (4) et au moins une ou deux butée(s) d'amortissement en trou oblong (5) destinée(s) à amortir la butée du boulon de serrage (2) à une extrémité (6) d'un trou oblong (7), **caractérisé en ce que** le corps d'enfichage (1) présente en outre au moins un amortisseur de porte-cames (8) destiné à amortir un mouvement de rotation entre un premier porte-cames (9) de la colonne de direction (3) et au moins un autre porte-cames (10) de la colonne de direction (3).

2. Corps d'enfichage (1) selon la revendication 1, **caractérisé en ce que** le corps d'enfichage (1) présente en outre une ou plusieurs face(s) de guidage (11) destinée(s) à glisser le long d'une paroi latérale (12) du trou oblong (7).

3. Corps d'enfichage (1) selon la revendication 1 ou 2, **caractérisé en ce que** le corps d'enfichage (1) présente au moins une butée de fin de course (13) destinée à limiter un mouvement de glissement du corps d'enfichage (1) le long du boulon de serrage (2).

4. Corps d'enfichage (1) selon la revendication 3, **caractérisé en ce que** la butée de fin de course (13) fait partie d'une languette élastique (14).

5. Corps d'enfichage (1) selon l'une quelconque des revendications 1 à 4, **caractérisé en ce qu'**il présente un ou plusieurs cran(s) (15) pour l'encliquetage du corps d'enfichage (1) sur un des porte-cames (9, 10).

6. Corps d'enfichage (1) selon l'une quelconque des revendications 1 à 5, **caractérisé en ce qu'**il comprend une matière plastique, de préférence élastomère, ou en est constitué.

7. Corps d'enfichage (1) selon l'une quelconque des revendications 1 à 6, **caractérisé en ce qu'**il est réalisé en une seule pièce.

8. Colonne de direction réglable (3) pour un véhicule automobile avec au moins un boulon de serrage (2) et au moins un corps d'enfichage (1) selon l'une quelconque des revendications 1 à 7, dans laquelle le boulon de serrage (2) est introduit à travers l'ouverture (4) du corps d'enfichage (1) et la ou les butée (s) en trou oblong (5) est ou sont disposée (s) dans un trou oblong (7) de la colonne de direction (3) et l'amortisseur de porte-cames (8) est disposé et/ou agit entre un premier porte-cames (9) de la colonne de direction (3) et au moins un autre porte-cames (10) de la colonne de direction (3).

9. Colonne de direction réglable (3) selon la revendication 8, **caractérisée en ce que** le corps d'enfichage (1) est monté sur le boulon de serrage (2) de façon coulissante dans la direction longitudinale (16) de celui-ci et/ou sur le boulon de serrage (2) de façon rotative dans la direction périphérique (17) de celui-ci.

10. Colonne de direction réglable (3) selon la revendication 8 ou 9, **caractérisée en ce que** le premier porte-cames (9) et/ou l'autre porte-cames (10) présentent des cames (19, 20) disposées dans un anneau (18) et coopérant les unes avec les autres et l'amortisseur de porte-cames (8) ou les amortisseurs de porte-cames (8) est ou sont disposé(s) à l'intérieur de l'anneau (18).
